# EUROPÄISCHE PATENTSCHRIFT

(11) **EP 1 106 585 B1**
(45) Veröffentlichungstag und Bekanntmachung des Hinweises auf die Patenterteilung: **24.09.2003**
(21) Anmeldenummer: 00124028.2
(22) Anmeldetag: 04.11.2000
(51) Int. Cl.: C03C 3/078, C03C 3/102, C03C 3/062, C03C 3/07

(54) **Zinkhaltige optische Gläser**
Optical glass containing zinc
Verre optique contenant du Zinc

(30) Priorität: 04.12.1999 DE 19958522
(43) Veröffentlichungstag der Anmeldung: 13.06.2001
(73) Patentinhaber: Schott Glas, 55122 Mainz (DE); Carl Zeiss Stiftung Trading as Schott Glaswerke, 55122 Mainz (DE)
(72) Erfinder: Mitra, Ina, Dr., 55271 Stadecken-Elsheim (DE); Grabowski, Danuta, 65232 Taunusstein-Wingsbach (DE); Kolberg, Uwe, Dr., 55252 Mainz-Kastel (DE); Kissl, Paul, 55127 Mainz (DE)

(56) Entgegenhaltungen:
- EP-A- 0 553 586
- WO-A-00/09456
- DE-A- 2 334 201
- CHEMICAL ABSTRACTS, vol. 93, no. 12, September 1980 (1980-09) Columbus, Ohio, US; abstract no. 118922a, V. CARBOL ET AL.: "energy saving by new glass compositions, development of low-melting glasses..." Seite 255; XP002162970 & GLASTEK. TIDSKR., Bd. 34, Nr. 4, 1979, Seite 81-91

## Beschreibung

Die Erfindung betrifft zinkhaltige optische Gläser, die Brechwerte n_{d} von 1,52 bis 1,66 und Abbezahlen ν_{d} von 35 bis 54 besitzen.

Bei der Herstellung optischer Gläser spielen neben der genauen Einstellung der geforderten optischen Eigenschaften und dem Erreichen einer hohen Transmission die Herstellungs- und Rohstoffkosten eine wesentliche Rolle.

Letzteres kann insbesondere durch den Einsatz preisgünstiger Gemengerohstoffe und durch Glaszusammensetzungen erreicht werden, die relativ geringe Schmelztemperaturen benötigen und damit geringere Energiekosten verursachen.

Ein Großteil der bekannten Gläser, die die oben genannten optischen Eigenschaften (Brechwerte, Abbezahlen) aufweisen, gehören zur Gruppe der Barit-Flinte. Zur Einstellung der gewünschten optischen Eigenschaften und zum Erreichen einer hohen Transmission werden weitgehend die hochwertigen und teuren Rohstoffe aus der Gruppe der Erdalkali-Oxide (BaO, SrO, CaO) sowie PbO verwendet.

Da die Glaskomponenten BaO und PbO als umweltbelastend in die öffentliche Diskussion gekommen sind, besteht bei den Herstellern von optischen Geräten der Bedarf an optischen Gläsern, die einen möglichst geringen Gehalt dieser Komponenten aufweisen.

Durch teilweise oder vollständige Substitution einer Glaskomponente gegen eine oder mehrere andere Glaskomponenten gelingt eine Reproduktion der geforderten optischen Eigenschaften in der Regel nicht. Statt dessen sind Neuentwicklungen oder weitreichende Änderungen in der Glaszusammensetzung nötig.

Der Patentliteratur sind einige Schriften zu entnehmen, die bereits Gläser mit optischen Werten aus dem genannten Bereich und mit ähnlichen Zusammensetzungen beschreiben. Jedoch zeigen die Gläser die verschiedensten Nachteile:

Die Gläser der japanischen Schrift JP 85-24060 B2 mit Brechwerten n_{d} von 1,59 bis 1,63 und Abbezahlen ν_{d} von 36 bis 50 enthalten neben 7 bis 30 Gew.-% ZnO die kritischen Komponenten BaO und PbO mit einem jeweiligen Gehalt von 1 bis 21,5 Gew.-%.

Ebenso kritisch zu bewerten ist der bei der SU 1534979 A1 vorgesehende, zwingend notwendige Gehalt an BaO von 0,9 bis 15,7 Gew.-%, wobei diese Gläser einen Brechwert n_{d} von 1,577 bis 1,634 aufweisen.

Die japanische Schrift JP 89-133956 A betrifft optische Gläser mit Brechwerten n_{d} zwischen 1,51 und 1,59 und Abbezahlen ν_{d} zwischen 39 und 58, die, wenn auch nur fakultativ, bis zu 44,06 Gew.-% PbO, bis zu 25,34 Gew.-% B₂O₃, bis zu 19,06 Gew.-% SrO und bis zu 11,3 Gew.-% CaO enthalten. Zusätzlich weisen diese Gläser einen relativ hohen Al₂O₃-Gehalt von 4,45 bis 44,10 Gew.-% auf, was mit einer Erhöhung der Schmelztemperatur verbunden ist. Zwingend erforderlich sind auch 0,08 bis 8,0 Gew.-% F. Die Gläser können außerdem insgesamt bis zu 11,1 Gew.-% As₂O₃ und Sb₂O₃ enthalten. Bei Verwendung dieser Komponenten in solch hohen Mengen sind bei der Produktion erhöhte Sicherheitsvorkehrungen nötig.

Die Gläser aus der Schrift JP 89-308843 A weisen mit n_{d} ≥ 1,62 relativ hohe Brechwerte und mit ν_{d} ≤ 37 relativ niedrige Abbezahlen auf. Neben hohen möglichen Gehalten an BaO, SrO und CaO ist ein hoher PbO-Gehalt von 30 bis 58 Gew.-% zwingend notwendig.

Mit einem n_{d} von 1,62 bis 1,85 weisen die in der Schrift JP 85-221338 A beschriebenen optischen Gläser ebenfalls relativ hohe Brechwerte auf, wobei die Gläser mindestens 1 bis 50 Gew.-% B₂O₃ enthalten und, wenn auch nur fakultativ, hohe Gehalte an BaO (0 bis 50 Gew.-%), SrO (0 bis 40 Gew.-%), CaO (0 bis 30 Gew.-%) und PbO (0 bis 30 Gew.-%) vorgesehen sind. B₂O₃ vermindert dabei die chemische Beständigkeit der Gläser. Dies gilt auch für die, in der Schrift SU 97 56 17 beschriebenen optischen Gläser, die neben einem Gehalt an B₂O₃ von 2 bis 90 Gew.-% auch noch CaO (5 bis 10 Gew.-%) aufweisen.

Die in der Schrift US 4,562,161 beschriebenen Borosilicatgläser beschreiben ebenfalls den genannten optischen Bereich, enthalten jedoch mindestens 3 Gew.-% B₂O₃ und mindestens 4 Gew.-% TiO₂, wobei sich TiO₂ nachteilig auf die Transmission, insbesondere im UV-Bereich, auswirkt.

Die deutsche Schrift DE 97 33 50 beschreibt optische Gläser, die einen relativ großen Bereich der Brechwerte (n_{d} 1,43 bis 1,77) und Abbezahlen (ν_{d} 28 bis 67) abdecken und daher weitgefaßte Zusammensetzungsbereiche aufweisen. Neben dem auffallend hohen fakultativen Anteil von bis zu 50 Gew.-% PbO enthalten die Gläser 0,2 bis 30 Gew.-% TiO₂ und 1,0 bis 12 Gew.-% F.

Neben der Hauptkomponente SiO₂ weisen die optischen Gläser der Schrift JP 85-122747 einen relativ hohen Gehalt von 5 bis 30 Gew.-% CaO auf, wobei die erreichbaren hohen Abbezahlen ν_{d} im Bereich von 51 bis 57 liegen.

Mit den cäsiumhaltigen optischen Gläsern der Schrift DE 22 63 501 C2 wird ebenfalls ein Bereich höherer Abbezahlen ν_{d} von 50 bis 60, abgedeckt. Die dabei zwischen 5 und 82,5 Gew.-% eingesetzte Komponente Cs₂O bedeutet eine deutliche Verteuerung des Glases.

Die Al₂O₃-haltigen (4 - 16 Gew.-%) und relativ alkaliarmen (Na₂O + K₂O 1 bis 9,5 Gew.-%) Gläser der Schrift JP 07 06 18 36 A werden nicht als optische Gläser, sondern für spezielle magnetische Anwendungen, die die beschriebenen Komponenten FeO₂ und MnO₂ erfordern, eingesetzt.

Im mit Er₂O₃ dotierbaren Glas nach EP 0 673 892 A2, das 1,5 bis 4 Gew.-% Al₂O₃ enthält, wird B₂O₃ durch PbO und/oder P₂O₅ zur Verbesserung der spektroskopischen Eigenschaften als optischer Verstärker ersetzt.

Die Verwendung von ZrO₂, wie z.B. in den Brillengläsern nach US 2,433,883 (2 bis 15 Gew.-% ZrO₂) und GB 2 233 781 A (5,71 bis 23,15 Gew.-% ZrO₂) sowie bei den TiO₂-haltigen optischen Gläsern gemäß EP 0 287 345 A1 (mindestens 2,3 Gew.-% ZrO₂), setzt beim Erschmelzen der Gläser die notwendige Schmelztemperatur herauf.

Die optischen Gläser nach JP 82 22 139 A enthalten u.a. 52 bis 75 Gew.-% SiO₂, 5 bis 25 Gew.-% ZnO und 3 bis 15 Gew.-% Li₂O. Das Wesentliche dieser Gläser ist jedoch nicht der Zusammensetzungsbereich, sondern der durch lonenaustausch in einer NaNO₃-Schmelze veränderte Brechwert.

Optische Gläser mit graduell einstellbaren Brechwerten beschreibt die Schrift JP 87-12633 A, wobei im wesentlichen Cäsium gegen Zink oder gegen andere zweiwertige Elemente ionenausgetauscht wird. Die Gläser zeichnen sich dabei besonders durch ihren Cäsiumgehalt von etwa 2,86 - 66,25 Gew.-% Cs₂O aus.

Es ist nun Aufgabe der Erfindung, optische Gläser mit einem Brechwert n_{d} von 1,52 bis 1,66 und einer Abbezahl ν_{d} von 35 bis 54 bereitzustellen, die eine hohe Transmission, eine hohe Kristallisationsstabilität und gute Schmelz- und Verarbeitungseigenschaften besitzen und kostengünstig produzierbar sind.

Diese Aufgabe wird durch die in Patentanspruch 1 beschriebenen optischen Gläser gelöst.

Die Gläser enthalten als Netzwerkbildner 38 bis 58 Gew.-% SiO₂, wobei bei einem Gehalt von über 58 Gew.-% die Schmelztemperatur unvorteilhaft ansteigt und die Brechwerte deutlich verringert werden.

Neben SiO₂ bildet ZnO mit einem Gehalt von 0,3 bis 42 Gew.-% die wesentliche Komponente der Gläser. Zusammen mit PbO, dessen Gehalt auf 0 bis < 30 Gew.-% beschränkt ist, wirkt ZnO sowohl als Netzwerkbildner als auch als Netzwerkwandler. Der Gesamtgehalt an ZnO und PbO liegt dabei im Bereich von 20 bis 55 Gew.-%. Mit hohen Gehalten an ZnO und PbO werden hohe Brechwerte n_{d} eingestellt. Durch die Variation des Verhältnisses ZnO zu PbO werden die Abbezahlen eingestellt, wobei mit hohen PbO-Anteilen niedrige Abbezahlen erreicht werden.

Die gute Schmelzbarkeit der Gläser ist auf deren Gesamtgehalt an Li₂O, Na₂O und K₂O von mindestens 2 Gew.-% zurückzuführen, wobei der Gehalt an Li₂O auf 0 bis < 3 Gew.-%, an Na₂O auf 0 bis 14 Gew.-% und an K₂O auf 0 bis 12 Gew.-% beschränkt ist.

Geringe Zusätze an Al₂O₃ (0 bis < 1,5 Gew.-%) und B₂O₃ (0 bis < 1 Gew.-%) sind möglich und erniedrigen ebenfalls die Einschmelztemperaturen. Zu hohe Al₂O₃-Gehalte führen jedoch zu einer Verschlechterung der Einschmelzbarkeit. Erhöhte B₂O₃-Gehalte wirken sich negativ auf die chemische Beständigkeit, insbesondere gegenüber alkalihaltigen Medien aus.

Auf hochschmelzende Komponenten wird weitgehend verzichtet. So ist der ZrO₂-Gehalt auf 0 bis < 2 Gew.-% beschränkt.

In untergeordnetem Maße können die Gläser, insbesondere zur Feinabstimmung ihrer optischen Eigenschaften 0 bis 6 Gew.-% MgO, 0 bis < 5 Gew.-% CaO, 0 bis 6 Gew.-% SrO und/oder 0 bis < 0,9 Gew.-% BaO enthalten, wobei die Gläser bevorzugt 0 bis < 0,5 Gew.-% BaO und besonders bevorzugt im wesentlichen frei von BaO sind.

Weiterhin sind 0 bis 3 Gew.-% F vorgesehen.

Je nach den Einschränkungen der jeweiligen Bereiche der Komponenten sind auch die Bereiche der optischen Daten, die die Gläser aufweisen, eingeschränkt.

So werden Gläser mit Brechwerten n_{d} von 1,54 bis 1,64 und Abbezahlen ν_{d} von 40 bis 52 im folgenden Zusammensetzungsbereich (in Gew.-% auf Oxidbasis) erhalten: SiO₂ 39 - 54, ZnO 12 - 41, PbO 6 - 22, ZnO + PbO 31 - 52, Li₂O 0 - < 3, Na₂O 0 - 13, K₂O 0 - 11, Li₂O + Na₂O + K₂O ≥ 2, F 0 - 3, MgO 0-6, CaO 0 - < 5, SrO 0 - 6, BaO 0 - < 0,9, B₂O₃ 0 - < 1, Al₂O₃ 0 - < 1,5 und ZrO₂ 0 - < 2.

Gläser mit Brechwerten n_{d} zwischen 1,56 und 1,63 und Abbezahlen ν_{d} zwischen 42 und 52 finden sich im Zusammensetzungsbereich (in Gew.-% auf Oxidbasis): SiO₂ 40 - 55, bevorzugt SiO₂ 40 - 53, ZnO 26 - 41, bevorzugt ZnO 28 - 41, PbO 1 - 16, ZnO + PbO 31 - 48, Li₂O 0 - < 3, Na₂O 0 - 12, K₂O 0 - 10, Li₂O + Na₂O + K₂O ≥ 2, F 0 - 3, MgO 0 - 6, CaO 0 - < 5, SrO 0 - 6, BaO 0 - < 0,9, B₂O₃ 0 - < 1, Al₂O₃ 0- < 1,5 und ZrO₂ 0 - < 2.

Brechwerte n_{d} von 1,60 bis 1,63 und Abbezahlen ν_{d} von 43 bis 47 werden mit Gläsern im folgenden Zusammensetzungsbereich (in Gew.-%. auf Oxidbasis) erhalten: SiO₂ 40 - 47, ZnO 32 - 41, PbO 5 - 14, ZnO + PbO 40 - 48, Li₂O 0 - < 3, Na₂O 0 - 14 bevorzugt 0 - 13 und besonders bevorzugt 0 - 12, K₂O 0 - 12 bevorzugt 0 - 11 und besonders bevorzugt 0 - 10, Li₂O + Na₂O + K₂O ≥ 2, F 0-3, MgO 0 - 6, CaO 0 - < 5, SrO 0 - 6, BaO 0 - < 0,9, B₂O₃ 0 - < 1, Al₂O₃ 0 - < 1,5 und ZrO₂ 0 - < 2.

Gläser aus dem Zusammensetzungsbereich (in Gew.-% auf Oxidbasis): SiO₂ 41 - 50, ZnO 30 - 40, PbO 0 - 1, ZnO + PbO 31 - 41, Li₂O 0 - < 3, Na₂O 0 - 11, K₂O 0 - 10, Li₂O + Na₂O + K₂O ≥ 2, F 0 - 3, MgO 0 - 6, CaO 0 - < 5, SrO 0 - 6, BaO 0 - < 0,9, B₂O₃ 0 - < 1, Al₂O₃ 0 - < 1,5 und ZrO₂ 0 - < 2, weisen Brechwerte n_{d} zwischen 1,57 und 1,59 und Abbezahlen ν_{d} zwischen 48 und 52 auf.

Zur Variation und zur präzisen Abstimmung der optischen Eigenschaften können die Gläser bis zu 2,5 Gew.-% an Cs₂O und/oder bis zu 5 Gew.-% an Rb₂O, La₂O₃, Y₂O₃ und/oder GeO₂ enthalten.

Vorzugsweise besitzen die beanspruchten optischen Gläser eine sehr hohe Reintransmission von wenigstens 0,98, bestimmt für eine Wellenlänge von 400 nm und 25 mm Probendicke.

Ein weiterer Vorteil der erfindungsgemäßen Gläser ist ihre Farbneutralität. Bei einem Zusatz von bevorzugt bis zu 8 Gew.-% an färbenden Komponenten zu den beschriebenen Glaszusammensetzungen kommt daher das charakteristische Spektrum der verwendeten färbenden Komponenten, wie z. B. CuO, Cr₂O₃, CoO, Fe₂O₃, MnO, NiO und/oder V₂O₅, besonders gut zur Geltung. Derart eingefärbte optische Gläser werden beispielsweise als optische Filter verwendet.

Zur Verbesserung der Glasqualität können dem Gemenge zu Läuterung des Glases ein oder mehrere bekannte Läutermittel in den üblichen Mengen zugegeben werden. So weist das Glas eine besonders gute innere Qualität bezüglich Blasen- und Schlierenfreiheit auf.

Bevorzugte Läutermittel sind dabei Sb₂O₃ und/oder As₂O₃, wobei deren Gehalt auf maximal 1 Gew.-%, bevorzugt 0,5 Gew.-%, beschränkt sein soll.

Die erfindungsgemäßen Gläser weisen neben den gewünschten optischen Eigenschaften folgende Vorzüge auf:

Die Verwendung der bislang üblichen, aber relativ teuren Glaskomponenten BaO, SrO und CaO konnte weitgehend minimiert werden. Insbesondere die Verwendung der kritischen Komponenten BaO und PbO konnte weiter verringert werden.

Dies gelang durch die Einführung der preisgünstigen und ökologisch unbedenklichen Komponente ZnO.

Weiterhin besitzen die Gläser eine gute Kristallisationsstabilität; sie sind darüber hinaus nicht nur gut zu verarbeiten, sondern auch gut schmelzbar.

Die Gläser besitzen eine genügend hohe chemische Beständigkeit. Die chemische Beständigkeit ist insbesondere für ihre weitere Bearbeitung wie Schleifen und Polieren von Bedeutung.

### Beispiele:

Es wurden 24 Beispiele erfindungsgemäßer Gläser aus üblichen Rohstoffen erschmolzen.

Die beschriebenen Gläser wurden dabei folgendermaßen hergestellt: Die Rohstoffe für die Oxide, die teilweise als Carbonate und/oder Nitrate eingesetzt wurden, wurden gemischt und bei 1300 - 1350 °C eingeschmolzen. Das Läutern erfolgte bei Temperaturen zwischen 1300 und 1400 °C. Danach wurde gut homogenisiert. Das Gießen des Glases in die gewünschte Form wurde bei 1220 - 1270 °C vorgenommen.

In Tabelle 2 sind die jeweilige Zusammensetzung (in Gew.-% auf Oxidbasis), der Brechwert n_{d}, die Abbezahl ν_{d} und die Reintransmission τᵢ für eine Wellenlänge von 400 nm und 25 mm Probendicke aufgeführt.

Beim Vergleich zwischen einem üblichen Baritflintglas ähnlicher optischer Lage, wie z.B. BaFN6 (mit n_{d} = 1,589 und ν_{d} = 48,45) gemäß SCHOTT-Katalog mit einer Reintransmission von τ_{i,400nm} = 0,93 und Beispiel 15 (mit n_{d} = 1,59 und ν_{d} = 48,4) mit einer Reintransmission von τ_{i,400nm} = 0,99 wird die verbesserte Transmission der erfindungsgemäßen Gläser deutlich.

Tabelle 1 zeigt ein Schmelzbeispiel für das in Tabelle 2 aufgeführte Beispiel 6.

Für Beispiel 6 wurde auch das Entglasungsverhalten bestimmt. Dabei zeigte sich, daß bei aufsteigender Temperaturführung auch nach einer Temperzeit von 60 min in einem Temperaturbereich von 650 bis 1050 °C keine Kristallisation auftritt.

**Tabelle 1:**

| Schmelzbeispiel für 100 kg berechnetes Glas (Beispiel 6, Tabelle 2) | | | |
|---|---|---|---|
| Oxid | Gew.% | Rohstoff | Einwaage [kg] |
| SiO₂ | 50,5 | SiO₂ | 50,70 |
| ZnO | 4,8 | ZnO | 4,85 |
| PbO | 28,2 | Pb₃O₄ | 28,96 |
| Na₂O | 6,7 | Na₂CO₃ | 11,46 |
| K₂O | 9,6 | K₂CO₃ | 14,06 |
| As₂O₃ | 0,2 | As₂O₃ | 0,20 |
| | | | |
| Summe | 100,0 | | 110,23 |

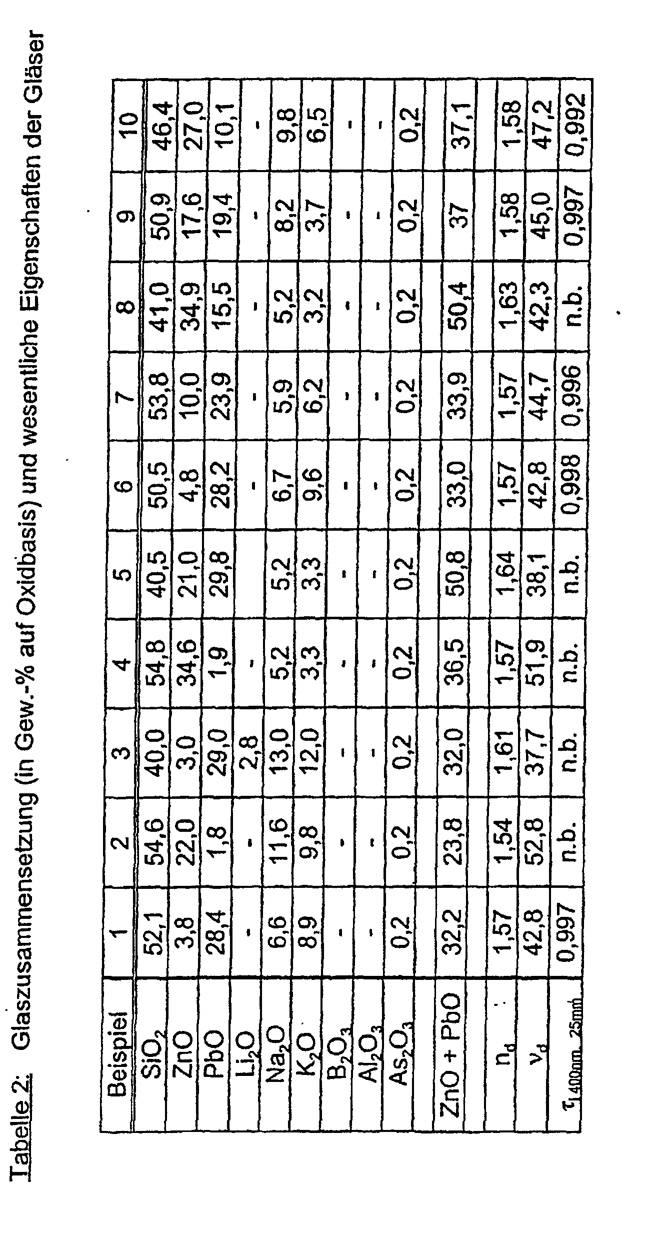

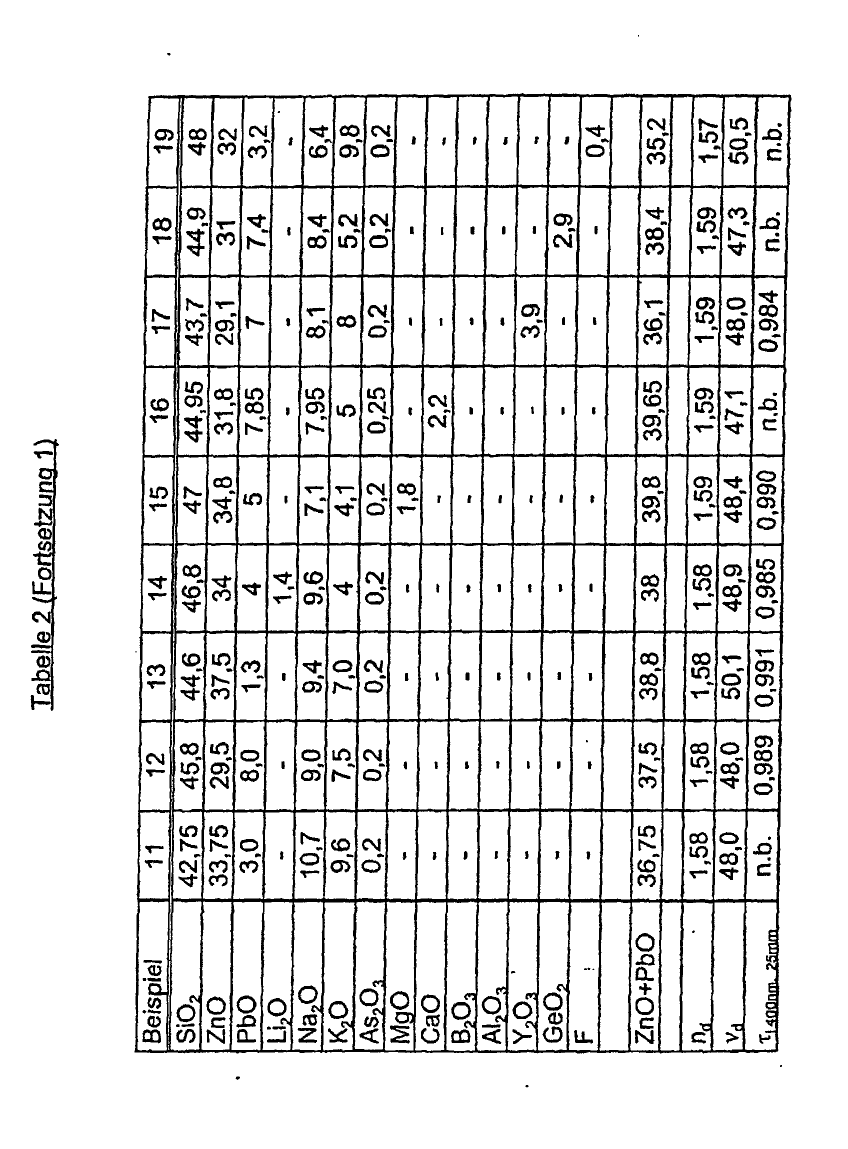

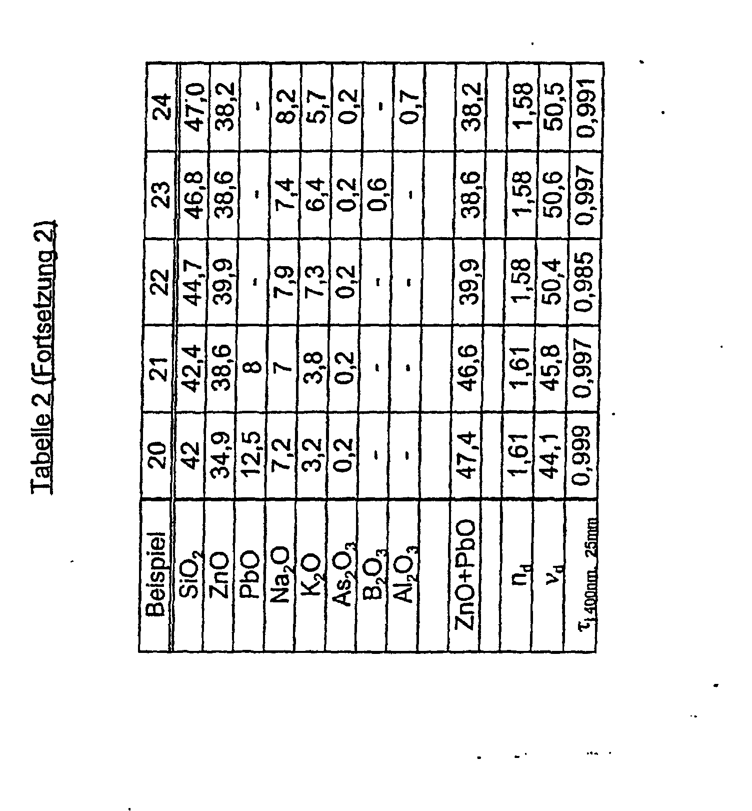

## Patentansprüche

1. Zinkhaltige optische Gläser mit einem Brechwert 1,52 ≤ n_{d} ≤ 1,66 und einer Abbezahl 35 ≤ ν_{d} ≤ 54,
**gekennzeichnet durch**
folgende Zusammensetzung (in Gew.-% auf Oxidbasis)
| | |
|---|---|
| SiO₂ | 38 - 58 |
| ZnO | 0,3 - 42 |
| PbO | 0 - < 30 |
| mit ZnO + PbO | 20 - 55 |
| Li₂O | 0 - < 3 |
| Na₂O | 0 - 14 |
| K₂O | 0 - 12 |
| mit Li₂O + Na₂O + K₂O | ≥ 2 |
| F | 0-3 |
| MgO | 0-6 |
| CaO | 0 - < 5 |
| SrO | 0-6 |
| BaO | 0 - < 0,9 |
| B₂O₃ | 0 - < 1 |
| Al₂O₃ | 0 - < 1,5 |
| ZrO₂ | 0 - < 2 |
sowie ggfs. Läutermittel in den üblichen Mengen.

2. Optische Gläser nach Anspruch 1 mit einem Brechwert 1,54 ≤ n_{d} ≤ 1,64 und einer Abbezahl 40 ≤ ν_{d} ≤ 52,
**gekennzeichnet durch**
folgende Zusammensetzung (in Gew.-% auf Oxidbasis)
| | |
|---|---|
| SiO ₂ | 39 - 54 |
| ZnO | 12 - 41 |
| PbO | 6 - 22 |
| mit ZnO + PbO | 31 - 52 |
| Li ₂ O | 0 - < 3 |
| Na ₂ O | 0 - 13 |
| K ₂ O | 0 - 11 |
| mit Li ₂ O + Na ₂ O + K ₂ O | ≥ 2 |
| F | 0 - 3 |
| MgO | 0 - 6 |
| CaO | 0 - < 5 |
| SrO | 0 - 6 |
| BaO | 0 - < 0,9 |
| B ₂ O ₃ | 0 - < 1 |
| Al ₂ O ₃ | 0 - < 1,5 |
| ZrO ₂ | 0 - < 2 |
sowie ggfs. Läutermittel in den üblichen Mengen.

3. Optische Gläser nach Anspruch 1 mit einem Brechwert 1,56 ≤ n_{d} ≤ 1,63 und einer Abbezahl 42 ≤ ν_{d} ≤ 52,
**gekennzeichnet durch**
folgende Zusammensetzung (in Gew.-% auf Oxidbasis)
| | |
|---|---|
| SiO₂ | 40 - 55 |
| ZnO | 26 - 41 |
| PbO | 1 - 16 |
| mit ZnO + PbO | 31 - 48 |
| Li₂O | 0 - < 3 |
| Na₂O | 0 - 12 |
| K₂O | 0 - 10 |
| mit Li₂O + Na₂O + K₂O | ≥ 2 |
| F | 0 - 3 |
| MgO | 0 - 6 |
| CaO | 0 - < 5 |
| SrO | 0 - 6 |
| BaO | 0 - < 0,9 |
| B₂O₃ | 0 - < 1 |
| Al₂O₃ | 0 - < 1,5 |
| ZrO₂ | 0 - < 2 |
sowie ggfs. Läutermittel in den üblichen Mengen.

4. Optische Gläser nach wenigstens einem der Ansprüche 1 bis 3 mit einem Brechwert 1,60 ≤ n_{d} ≤ 1,63 und eine Abbezahl 43 ≤ ν_{d} ≤ 47,
**gekennzeichnet durch**
folgende Zusammensetzung (in Gew.-% auf Oxidbasis)
| | |
|---|---|
| SiO₂ | 40 - 47 |
| ZnO | 32 - 41 |
| PbO | 5 - 14 |
| mit ZnO + PbO | 40 - 48 |
| Li₂O | 0 - < 3 |
| Na₂O | 0 - 12 |
| K₂O | 0 - 10 |
| mit Li₂O + Na₂O + K₂O | ≥ 2 |
| F | 0 - 3 |
| MgO | 0 - 6 |
| CaO | 0 - < 5 |
| SrO | 0 - 6 |
| BaO | 0 - < 0,9 |
| B₂O₃ | 0 - < 1 |
| Al₂O₃ | 0 - < 1,5 |
| ZrO₂ | 0 - < 2 |
sowie ggfs. Läutermittel in den üblichen Mengen.

5. Optische Gläser nach Anspruch 1 mit einem Brechwert 1,57 ≤ n_{d} ≤ 1,59 und einer Abbezahl 48 ≤ ν_{d} ≤ 52,
**gekennzeichnet durch**
folgende Zusammensetzung (in Gew.-% auf Oxidbasis)
| | |
|---|---|
| SiO ₂ | 41 - 50 |
| ZnO | 30 - 40 |
| PbO | 0 - 1 |
| mit ZnO + PbO | 31 - 41 |
| Li ₂ O | 0 - < 3 |
| Na ₂ O | 0 - 11 |
| K ₂ O | 0 - 10 |
| mit Li ₂ O + Na ₂ O + K ₂ O | ≥ 2 |
| F | 0 - 3 |
| MgO | 0 - 6 |
| CaO | 0 - < 5 |
| SrO | 0 - 6 |
| BaO | 0 - < 0,9 |
| B ₂ O ₃ | 0 - < 1 |
| Al ₂ O ₃ | 0 - < 1,5 |
| ZrO ₂ | 0 - < 2 |
sowie ggfs. Läutermittel in den üblichen Mengen.

6. Optische Gläser nach wenigstens einem der Ansprüche 1 bis 5,
**dadurch gekennzeichnet,**
**daß** die Gläser bis zu 5 Gew.-% Rb₂O, La₂O₃, Y₂O₃ und/oder GeO₂ enthalten.

7. Optische Gläser nach wenigstens einem der Ansprüche 1 bis 6,
**dadurch gekennzeichnet,**
**daß** die Gläser bis zu maximal 2,5 Gew.-% Cs₂O enthalten.

8. Optische Gläser nach wenigstens einem der Ansprüche 1 bis 5,
**dadurch gekennzeichnet,**
**daß** die Reintransmission der Gläser, bestimmt bei 400 nm und 25 mm Probendicke, mindestens 0,98 beträgt.

9. Optische Gläser nach wenigstens einem der Ansprüche 1 bis 7,
**dadurch gekennzeichnet,**
**daß** die Gläser bis zu 8 Gew.-% an färbenden Komponenten enthalten.

10. Optische Gläser nach wenigstens einem der Ansprüche 1 bis 9,
**dadurch gekennzeichnet,**
**daß** die Gläser insgesamt bis zu 1 Gew.-% As₂O₃ und/oder Sb₂O₃ enthalten.

## Claims

1. Zinc-containing optical glass materials with a refractive index of 1.52 ≤ n_{d} ≤ 1.66 and an Abbe number of 35 ≤ ν_{d} ≤ 54, **characterized by** the following composition (in % by weight based on oxide)
| | |
|---|---|
| SiO₂ | 38 - 58 |
| ZnO | 0.3 - 42 |
| PbO | 0 - <30 |
| with ZnO+PbO | 20 - 55 |
| Li₂O | 0 - <3 |
| Na₂O | 0 - 14 |
| K₂O | 0 - 12 |
| with Li₂O+Na₂O+K₂O | ≥2 |
| F | 0 - 3 |
| MgO | 0 - 6 |
| CaO | 0 - <5 |
| SrO | 0 - 6 |
| BaO | 0 - <0.9 |
| B₂O₃ | 0 - <1 |
| Al₂O₃ | 0 - <1.5 |
| ZrO₂ | 0 - <2 |
and, if appropriate, refining agents in the customary amounts.

2. Optical glass materials according to Claim 1 with a refractive index of 1.54 ≤ n_{d} ≤ 1.64 and an Abbe number of 40 ≤ ν_{d} ≤ 52, **characterized by** the following composition (in % by weight based on oxide)
| | |
|---|---|
| SiO₂ | 39 - 54 |
| ZnO | 12 - 41 |
| PbO | 6 - 22 |
| With ZnO+PbO | 31 - 52 |
| Li₂O | 0 - <3 |
| Na₂O | 0 - 13 |
| K₂O | 0 - 11 |
| With Li₂O+Na₂O+K₂O | ≥2 |
| F | 0 - 3 |
| MgO | 0 - 6 |
| CaO | 0 - <5 |
| SrO | 0 - 6 |
| BaO | 0 - <0.9 |
| B₂O₃ | 0 - <1 |
| Al₂O₃ | 0 - <1.5 |
| ZrO₂ | 0 - <2 |
and, if appropriate, refining agents in the customary amounts.

3. Optical glass materials according to Claim 1 with a refractive index of 1.56 ≤ n_{d} ≤ 1.63 and an Abbe number of 42 ≤ ν_{d} ≤ 52, **characterized by** the following composition (in % by weight based on oxide)
| | |
|---|---|
| SiO₂ | 40 - 55 |
| ZnO | 26 - 41 |
| PbO | 1 - 16 |
| With ZnO+PbO | 31 - 48 |
| Li₂O | 0 - <3 |
| Na₂O | 0 - 12 |
| K₂O | 0 - 10 |
| With Li₂O+Na₂O+K₂O | ≥2 |
| F | 0 - 3 |
| MgO | 0 - 6 |
| CaO | 0 - <5 |
| SrO | 0 - 6 |
| BaO | 0 - <0.9 |
| H₂O₃ | 0 - <1 |
| Al₂O₃ | 0 - <1.5 |
| ZrO₂ | 0 - <2 |
and, if appropriate, refining agents in the customary amounts.

4. Optical glass materials according to at least one of Claims 1 to 3 with a refractive index of 1.60 ≤ n_{d} ≤ 1.63 and an Abbe number of 43 ≤ ν_{d} ≤ 47, **characterized by** the following composition (in % by weight based on oxide)
| | |
|---|---|
| SiO₂ | 40 - 47 |
| ZnO | 32 - 41 |
| PbO | 5 - 14 |
| With ZnO+PbO | 40 - 48 |
| Li₂O | 0 - <3 |
| Na₂O | 0 - 12 |
| K₂O | 0 - 10 |
| With Li₂O+Na₂O+K₂O | ≥2 |
| F | 0 - 3 |
| MgO | 0 - 6 |
| CaO | 0 - <5 |
| SrO | 0 - 6 |
| BaO | 0 - <0.9 |
| B₂O₃ | 0 - <1 |
| Al₂O₃ | 0 - <1.5 |
| ZrO₂ | 0 - <2 |
and, if appropriate, refining agents in the customary amounts.

5. Optical glass materials according to Claim 1 with a refractive index of 1.57 ≤ n_{d} ≤ 1.59 and an Abbe number of 48 ≤ ν_{d} ≤ 52, **characterized by** the following composition (in % by weight based on oxide)
| | |
|---|---|
| SiO₂ | 41 - 50 |
| ZnO | 30 - 40 |
| PbO | 0 - 1 |
| With ZnO+PbO | 31 - 41 |
| Li₂O | 0 - <3 |
| Na₂O | 0 - 11. |
| K₂O | 0 - 10 |
| With Li₂O+Na₂O+K₂O | ≥2 |
| F | 0 - 3 |
| MgO | 0 - 6 |
| CaO | 0 - <5 |
| SrO | 0 - 6 |
| BaO | 0 - <0.9 |
| B₂O₃ | 0 - <1 |
| Al₂O₃ | 0 - <1.5 |
| ZrO₂ | 0 - <2 |
and, if appropriate, refining agents in the customary amounts.

6. Optical glass materials according to at least one of Claims 1 to 5, **characterized in that** the glass materials contain up to 5% by weight Rb₂O, La₂O₃, Y₂O₃ and/or GeO₂.

7. Optical glass materials according to at least one of Claims 1 to 6, **characterized in that** the glass materials contain up to at most 2.5% by weight Cs₂O.

8. Optical glass materials according to at least one of Claims 1 to 5, **characterized in that** the pure transmission of the glass materials, determined at 400 nm and 25 mm specimen thickness, is at least 0.98.

9. Optical glass materials according to at least one of Claims 1 to 7, **characterized in that** the glass materials contain up to 8% by weight of colouring components.

10. Optical glass materials according to at least one of Claims 1 to 9, **characterized in that** the glass materials contain in total up to 1% by weight As₂O₃ and/or Sb₂O₃.

## Revendications

1. Verres optiques contenant du zinc présentant un indice de réfraction de 1,52 ≤ n_{d} ≤ 1,66 et un indice. d'Abbe de 35 ≤ ν_{d} ≤ 54, **caractérisés par** la composition suivante (en % en poids sur base d'oxyde) :
| | |
|---|---|
| SiO₂ | 38 à 58 |
| ZnO | 0,3 à 42 |
| PbO | 0 à < 30 |
| avec ZnO + PbO | 20 à 55 |
| Li₂O | 0 à < 3 |
| Na₂O | 0 à 14 |
| K₂O | 0 à 12 |
| avec Li₂O + Na₂O + K₂O | ≥ 2 |
| F | 0 à 3 |
| MgO | 0 à 6 |
| CaO | 0 à < 5 |
| SrO | 0 à 6 |
| BaO | 0 à < 0,9 |
| B₂O₃ | 0 à < 1 |
| Al₂O₃ | 0 à < 1,5 |
| ZrO₂ | 0 à < 2 |
ainsi que le cas échéant des agents d'affinage en des quantités usuelles.

2. Verres optiques selon la revendication 1, présentant un indice de réfraction de 1,54 ≤ n_{d} ≤ 1,64 et un indice d'Abbe de 40 ≤ ν_{d} ≤ 52, **caractérisés par** la composition suivante (en % en poids sur base d'oxyde) :
| | |
|---|---|
| SiO₂ | 39 à 54 |
| ZnO | 12 à 41 |
| PbO | 6 à 22 |
| avec ZnO + PbO | 31 à 52 |
| Li₂O | 0 à < 3 |
| Na₂O | 0 à 13 |
| K₂O | 0 à 11 |
| avec Li₂O + Na₂O + K₂O | ≥ 2 |
| F | 0 à 3 |
| MgO | 0 à 6 |
| CaO | 0 à < 5 |
| SrO | 0 à 6 |
| BaO | 0 à < 0,9 |
| B₂O₃ | 0 à < 1 |
| Al₂O₃ | 0 à < 1,5 |
| ZrO₂ | 0 à < 2 |
ainsi que le cas échéant des agents d'affinage en des quantités usuelles.

3. Verres optiques selon la revendication 1, présentant un indice de réfraction de 1,56 ≤ n_{d} ≤ 1,63 et un indice d'Abbe de 42 ≤ ν_{d} ≤ 52, **caractérisés par** la composition suivante (en % en poids sur base d'oxyde) :
| | |
|---|---|
| SiO₂ | 40 à 55 |
| ZnO | 26 à 41 |
| PbO | 1 à 16 |
| avec ZnO + PbO | 31 à 48 |
| Li₂O | 0 à < 3 |
| Na₂O | 0 à 12 |
| K₂O | 0 à 10 |
| avec Li₂O + Na₂O + K₂O | ≥ 2 |
| F | 0 à 3 |
| MgO | 0 à 6 |
| CaO | 0 à < 5 |
| SrO | 0 à 6 |
| BaO | 0 à < 0,9 |
| B₂O₃ | 0 à < 1 |
| Al₂O₃ | 0 à < 1,5 |
| ZrO₂ | 0 à < 2 |
ainsi que le cas échéant des agents d'affinage en des quantités usuelles.

4. Verres optiques selon au moins l'une quelconque des revendications 1 à 3, présentant un indice de réfraction de 1,60 ≤ n_{d} ≤ 1,63 et un indice d'Abbe de 43 ≤ ν_{d} ≤ 47, **caractérisés par** la composition suivante (en % en poids sur base d'oxyde) :
| | |
|---|---|
| SiO₂ | 40 à 47 |
| ZnO | 32 à 41 |
| PbO | 5 à 14 |
| avec ZnO + PbO | 40 à 48 |
| Li₂O | 0 à < 3 |
| Na₂O | 0 à 12 |
| K₂O | 0 à 10 |
| avec Li₂O + Na₂O + K₂O | ≥ 2 |
| F | 0 à 3 |
| MgO | 0 à 6 |
| CaO | 0 à < 5 |
| SrO | 0 à 6 |
| BaO | 0 à < 0,9 |
| B₂O₃ | 0 à < 1 |
| Al₂O₃ | 0 à < 1,5 |
| ZrO₂ | 0 à < 2 |
ainsi que le cas échéant des agents d'affinage en des quantités usuelles.

5. Verres optiques selon la revendication 1, présentant un indice de réfraction de 1,57 ≤ n_{d} ≤ 1,59 et un indice d'Abbe de 48 ≤ ν_{d} ≤ 52, **caractérisés par** la composition suivante (en % en poids sur base d'oxyde) :
| | |
|---|---|
| SiO₂ | 41 à 50 |
| ZnO | 30 à 40 |
| PbO | 0 à 1 |
| avec ZnO + PbO | 31 à 41 |
| Li₂O | 0 à < 3 |
| Na₂O | 0 à 11 |
| K₂O | 0 à 10 |
| avec Li₂O + Na₂O + K₂O | ≥ 2 |
| F | 0 à 3 |
| MgO | 0 à 6 |
| CaO | 0 à < 5 |
| SrO | 0 à 6 |
| BaO | 0 à < 0,9 |
| B₂O₃ | 0 à < 1 |
| Al₂O₃ | 0 à < 1,5 |
| ZrO₂ | 0 à < 2 |
ainsi que le cas échéant des agents d'affinage en des quantités usuelles.

6. Verres optiques selon au moins l'une quelconque des revendications 1 à 5, **caractérisés en ce que** les verres contiennent jusqu'à 5% en poids de Rb₂O, La₂O₃, Y₂O₃ et/ou de GeO₂.

7. Verres optiques selon au moins l'une quelconque des revendications 1 à 6, **caractérisés en ce que** les verres contiennent jusqu'au maximum 2,5% en poids de Cs₂O.

8. Verres optiques selon au moins l'une quelconque des revendications 1 à 5, **caractérisés en ce que** la transmission pure des verres, déterminée à 400 nm et à une épaisseur d'échantillon de 25 mm, est d'au moins 0,98.

9. Verres optiques selon au moins l'une quelconque des revendications 1 à 7, **caractérisés en ce que** les verres contiénnent jusqu'à 8% en poids de composants teintants.

10. Verres optiques selon au moins l'une quelconque des revendications 1 à 9, **caractérisés en ce que** les verres contiennent au total jusqu'à 1% en poids d'As₂O₃ et/ou de Sb₂O₃.
